# EUROPEAN PATENT APPLICATION

(11) **EP 2 151 312 A1**
(43) Date of publication of application: **10.02.2010**
(21) Application number: 08161991.8
(22) Date of filing: 07.08.2008
(51) Int. Cl.: B29C 70/32, B29C 70/54, B29B 11/16

(54) **Semi-finished product and method for obtaining it**

(71) Applicant: Delft University of Technology, 2629 HS Delft (NL)
(72) Inventor: Van Den Akker, Lucas, 2553 TS Den Haag (NL); Duurkoop, Daan, 2553 TS Den Haag (NL); Beukers, Adriaan, 2629 HS Delft (NL)
(74) Representative: Brouwer, Hendrik Rogier

(57) **Abstract**

The invention relates to method for manufacturing a semi-finished product. The method comprises the steps of positioning a plurality of elongated reinforcing elements, excluding drawn polyethylene reinforcing elements, onto a mandrel, allocating in the thus produced product a first part and, distinct therefrom, a second part, fixating the reinforcing elements in the first part, and removing the semi-finished product from the mandrel. The invention also relates to a semi-finished product, comprising a first part with fixated reinforcing elements, excluding drawn polymeric reinforcing elements, and a distinct second part, and to a method for manufacturing a finished product from the semi-finished product.

## Description

The invention relates to a method for manufacturing a semi-finished product and to a semi-finished product, obtainable by such a method. The invention further relates to a method for manufacturing a finished product from the semi-finished product.

Finished products made of reinforcing elements embedded in a polymer matrix combine high strength and low weight. Several methods exist for manufacturing such composite products, such as helmets for instance. The filament winding method comprises the steps of impregnating elongated reinforcing elements with the polymer matrix, positioning the reinforcing elements onto a mandrel along specific paths to create a desired configuration for the reinforcing elements, and hardening the polymer matrix at elevated temperature and pressure.

Although the known method yields suitable finished products, the filament winding method has its limitations. It is for instance difficult to control the configuration of the reinforcing elements onto the mandrel, and some configurations may not be attainable at all. As a result, the finished product may show a less than optimal performance with respect to weight and strength.

The object of the present invention is to provide a method for manufacturing a semi-finished product with better handling properties than known methods. Another object is to provide a method for manufacturing a finished product with improved performance with respect to weight and strength over known finished products.

The invention thereto provides a method for manufacturing a semi-finished product first, the method comprising the steps of positioning a plurality of elongated reinforcing elements, excluding drawn polyethylene reinforcing elements, onto a mandrel, allocating in the thus produced product a first part and, distinct therefrom, a second part, fixating the reinforcing elements in the first part, and removing the semi-finished product from the mandrel. According to the invention, the method for manufacturing a finished product then comprises optionally applying matrix material to the semi-finished product, positioning the semi-finished product into a mould and compressing said semi-finished product at an elevated temperature and pressure to harden the matrix material. By providing the semi-finished product as described above, a finished product is obtained in which the configuration of the reinforcing elements is controlled better than in the state of the art method. This yields a finished product with improved properties, such as strength, stiffness and low weight.

The method of the invention moreover provides a semi-finished product that is easily handled due to the fixation of the reinforcing elements in the first part, without having to embed the majority of the reinforcing elements in a polymer matrix. In the context of the present invention, a first part of the semi-finished product may be an assembly of points, linear, two-dimensional or three-dimensional. A first part moreover may comprise several parts of the semi-finished product, which may or may not be contiguous. In the particular case of a helmet for instance, the first part may comprise the circumferential rim of the helmet (the 'equator') and a circular part around the apex of the helmet (the 'pole'). The second part is defined as that part of the semi-finished product which does not cover the first part. The second part may likewise be an assembly of points, linear, two-dimensional or three-dimensional, and may comprise several parts of the semi-finished product, which may or may not be contiguous. In the first part, the reinforcing elements are fixated. The second part is distinct from the first part in that it covers a distinct area of the semi-finished product, and in that the reinforcing elements in the second part are not fixated to the extent they are fixated in the first part.

A composite finished product derives its stiffness and strength mainly from the reinforcing elements, such as reinforcing fibers for instance. It is therefore important to be able to achieve a desired configuration of the reinforcing elements in the finished product, by which is preferably meant that the reinforcing elements are positioned such that they take the majority of the loads imposed on the product in actual use. The desired configuration of the reinforcing elements may be obtained by means known in the art, such as by finite element calculations. In a preferred embodiment of the method, the method is **characterized in that** a desired configuration of the reinforcing elements in a finished product is established, and that the reinforcing elements in the semi-finished product are fixated such that the desired configuration is substantially obtained in the finished product when processing the semi-finished product into the finished product. Even more preferably, the method is **characterized in that** the geometry of the first part is chosen such that the desired configuration is substantially obtained. According to the invention, processing the semi-finished product into a finished product is carried out by a method comprising applying matrix material to the semi-finished product, positioning the semi-finished product into a mould and compressing said semi-finished product at an elevated temperature and pressure to harden the matrix material. In this process, the configuration of the reinforcing elements may change, for instance due to differences in the shape of the mould and the mandrel, or due to limitations with respect to deformability of the semi-finished product. Indeed, a semi-finished product of reinforcing elements cannot be draped over any surface, without wrinkling or changing angles. Each semi-finished product has its own drape properties, which may be assessed by means known in the art. By fixating the reinforcing elements in the first part of the semi-finished product, the reinforcing elements are substantially prevented from moving in the first part, for instance are prevented from changing angles, and therefore substantially retain their configuration in this part. Also, fixating the reinforcing elements in the first part may induce desired deformation of the semi-finished product in the second area.

The reinforcing elements may comprise tapes or fibers of any material, including carbon or graphite and glass, with the exception of drawn polyethylene fibers, such as ultrahigh molecular weight polyethylene fibers. Other fibers to be suitably applied in the semi-finished product according to the invention are drawn thermoplastic polymer fibers, comprising poly(p-phenylene-2, 6-benzobisoxazole) fibers (PBO, Zylon®), aramid fibers, and poly(2,6-diimidazo-(4,5b-4',5'e)pyridinylene-1,4(2,5-dihydroxy)phenylene) fibers (M5® fibers), or combinations thereof.

In a first embodiment of the method according to the invention, the step of fixating the reinforcing elements comprises applying textile fixation means, such as stitching, braiding, knitting, and the like. Stitching is a cheap and well-controlled method of fixation and allows for shearing of reinforcing elements, while the reinforcing elements show improved coherence. Thread of the same material as the reinforcing elements may be used, although the skilled person will generally be able to choose suitable materials. Preferably, the mandrel comprises a groove at locations to be stitched, which provides room for the needle.

In another embodiment, the step of fixating reinforcing elements comprises applying adhering means. Adhering means can be applied over a larger contact surface of the reinforcing elements than the surface covered in the case of stitching, leading to improved fixation strength and therefore to improved handling properties. The adhering means may be applied manually or by using computer controlled tools, such as pistols. Another advantageous method is to make use of a mandrel, which has an inner cavity for storing adhering means and a passage to the outer of the mandrel, for guiding the adhering means from the inner towards the positioned reinforcing elements within the first part.

Preferably, the method according to the invention uses adhering means, comprising a thermoset or thermoplastic adhesive, and preferably fixates the reinforcing elements by temporary heating the adhesive. It has advantages when the adhesive comprises adhesive tape, applied onto the mandrel before positioning the reinforcing elements, and/or onto the reinforcing elements after and/or during positioning of the reinforcing elements. Applying adhesive tape is easy and can be performed accurately. In a preferred method, double-sided tape is applied onto the mandrel at predetermined locations, then the reinforcing elements are positioned onto the mandrel and the adhesive tape. Optionally, after positioning the reinforcing elements onto the mandrel, adhesive tape may be applied onto the reinforcing elements for (additional) fixation. Preferably, the adhesion force between the double-sided tape and the mandrel is lower than the adhesive force between the tape and the reinforcing elements. This allows for easy removal of the semi-finished product from the mandrel.

Also preferred is a method in which the adhering means comprise polymeric fibers, commingled with the reinforcing elements, and the step of fixating the reinforcing elements comprises temporary heating the fibers. This feature leads to easy fixation, as the adhesive means are integrated with the reinforcing elements. Just heating the polymer above its melting temperature will provide the adhesive, which will fixate the reinforcing elements after removing the heat source. Another advantage of this embodiment is that the polymeric fibers may also act as matrix polymer for the reinforcing elements. The semi-finished product therefore needs not to be impregnated with a matrix polymer separately.

Temporary heating may be provided by any heat source. It is possible for instance to heat (parts of the) mandrel, by applying a heat source such as oil, IR, or other means known to the skilled person. In case the adhesive means comprise thermoplastic materials, the applied temperature is preferably higher than the melting temperature of the thermoplastic, or in case the thermoplastic material does not exhibit a clear melting temperature, the temperature at which the thermoplastic starts to lose its mechanical properties. After removing the heat source, the adhesive will solidify and thereby fixate the reinforcing elements. In case the adhesive means comprise thermosetting materials, the thermosetting materials will cure at elevated temperature, thereby fixating the reinforcing elements.

In another preferred embodiment of the invention, the method comprises the step of cutting reinforcing elements. Preferably, reinforcing elements are cut along a closed contour to divide the semi-finished product into parts that can be demolded. It becomes possible to partition a semi-finished product which is still on a mandrel into demoldable parts. The presence of fixated reinforcing elements provides enough stability to such parts to make them easily handleable. Cutting the semi-finished product creates at least two edges with low coherence between the reinforcing elements. By defining a first part along the cutting line the reinforcing elements the handling of the semi-finished product will improve, due to the fixation of the reinforcing elements nearby the cutting line. An example of cutting the semi-finished product is in the case of positioning reinforcing elements about a spherical shaped mandrel. The shape of such mandrel requires cutting of the reinforcing elements before removing the semi-finished product from the mandrel. By cutting reinforcing elements within a first part, reinforcing elements nearby the thus created edges are fixated, thereby leading to good handling of the semi-finished product. It may also be possible to cut reinforcing elements within second parts, e.g. in the case of creating a hole within the semi-finished product. By cutting within the second parts, the reinforcing elements will be fixated within the first parts thereby providing good handling of the semi-finished product.

In still another preferred embodiment of the method according to the invention, reinforcing elements are cut along a contour to prevent wrinkling of the semi-finished product during subsequent processing into a finished product. Wrinkles originate from excess material for a particular curvature of a mould. The present embodiment of the method of the invention takes away such excess material in the semi-finished product by cutting reinforcing elements along the edges of an area where excess material should be removed. Reinforcing elements nearby or at cut edges show low coherence with surrounding reinforcing elements and therefore tend to displace during handling. Preferably therefore, the first part comprises edges around an area where wrinkles would occur. Fixating the edges of an area where excess material is removed improves the coherence and stability of the 'wrinkle free' semi-finished product.

The invention also relates to a semi-finished product, comprising a first part with fixated reinforcing elements, excluding drawn polyethylene reinforcing elements, and a distinct second part, and obtainable by the method according to the invention as described above.

Preferably the semi-finished product is **characterized in that** the area covered by the first part is less than 50% of the area covered by the semi-finished product, more preferably less than 30%, even more preferably less than 15%, and most preferably less than 10%. The lesser the area fraction of the first part, the better the ability to deform the semi-finished product into a variety of different shapes.

The invention also relates to a finished product, preferably a helmet, obtainable by a method according to the invention. To manufacture the finished product, matrix material is optionally applied to the semi-finished product, and the product positioned into a mould. The mould is then closed and the semi-finished product is compressed at an elevated temperature and pressure, the level of which depends on the matrix material and desired properties. Any matrix material known in the art may be used in the method of the invention. Examples of suitable matrix materials for the reinforcing elements include thermoplastic polymers such as polyamides, polyimides, polyethersulphones, polyetheretherketone, polyurethanes, polyethylene, polypropylene, polyphenylene sulphides (PPS), polyamide-imides, acrylonitrile butadiene styrene (ABS), styrene/maleic anhydride (SMA), polycarbonate, polyphenylene oxide blend (PPO), thermoplastic polyesters such as polyethylene terephthalate, polybutylene terephthalate, as well as mixtures and copolymers of one or more of the above polymers. Suitable matrix materials also comprise thermosetting polymers such as epoxies, unsaturated polyester resins, melamine/formaldehyde resins, phenol/formaldehyde resins, polyurethanes, and the like.

The invention will now be described in more detail, by way of example, with reference to the accompanying figures, in which:
figure 1 schematically represents an apparatus to carry out the method for manufacturing a semi-finished product according to the invention;
figures 2A, 2B and 2C schematically represent several first parts of the semi-finished product of the invention;
figure 3 schematically represents a method to close a gap at the apex of a helmet;
figures 4A to 4D schematically represent several adhering means for obtaining the first parts of the semi-finished product of the invention; and
figures 5A and 5B schematically represent suitable mandrels to be used in the method of the invention.

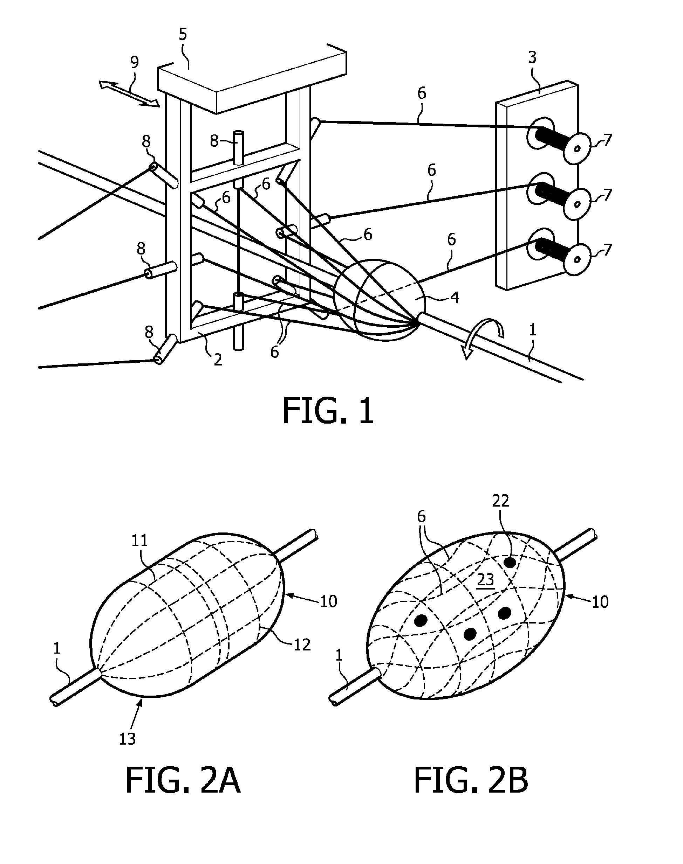

With reference to figure 1, an apparatus to carry out the method for manufacturing a semi-finished product according to the invention comprises a creel 3 from which a plurality of reinforcing fibers 6 may be unwound from bobbins 7. A mandrel 4 is connected to a rotatable winding axis 1. The reinforcing fibers 6 are positioned onto mandrel 4 in a particular configuration, which is determined by the movement of a lateral actuator 5 in the direction 9, and the rotation of mandrel 4. The reinforcing fibers 6 are guided by a winding frame 2, provided with multiple feed eyes 8. Winding frame 2 connects to lateral actuator 5.

According to the invention, a plurality of elongated reinforcing elements 6 are positioned onto mandrel 4, and in the thus produced product 10 a first part and, distinct therefrom, a second part are allocated. As shown in figure 2A, the first part may comprise a plurality of fixation lines 11 and 12. Lines 11 extend substantially in the longitudinal direction of the semi-finished product 10, while lines 12 extend substantially in the circumferential direction. Along lines 11 and 12, the reinforcing fibers 6 are fixated with fixation means that are further explained below. The second part 13 of semi-finished product 10 comprises product that is not occupied by lines 11 and 12. The grid, formed by fixation lines (11, 12) substantially preserves the shape of the semi-finished product 10 when removing this from mandrel 4. The number of fixation lines (11,12) determines the extent to which the shape is preserved.

Another embodiment is shown in figure 2B, wherein the first part comprises a plurality of fixation points 22. Points 22 fixate the reinforcing fibers 6 such that their orientation is substantially preserved between points 22. The second part 23 of semi-finished product 10 in this embodiment comprises product that is not occupied by the points 22. Any number of fixation points 22 may be used.

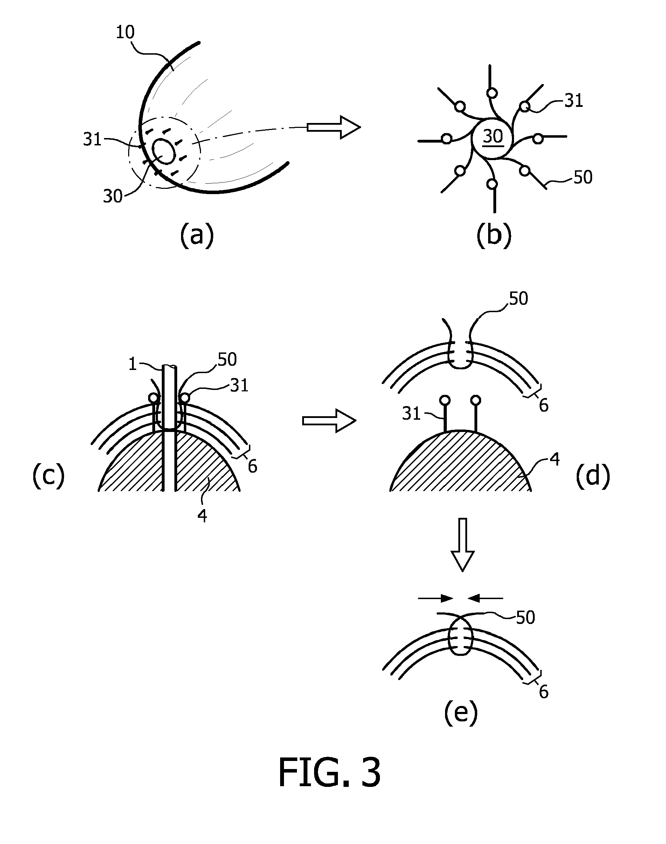

Figure 3 represents a method to close a gap at the apex of a filament wound product, and in particular a helmet. When filament winding a helmet in the conventional way, a hole is created at the apex, due to the presence of the winding axis 1. Before positioning the reinforcing fibers 6 onto mandrel 4, mandrel 4 is provided with an array of needles 31 around the apex or polar opening 30 (figure 3(a)). Fixation means 50 in the form of thread is then applied through the eyes of needles 31 (figure 3(b)). A plurality of reinforcing fibers 6 is then positioned onto mandrel 4, leaving the apex 30 open, due to the presence of winding axis 1 (figure 3(c)). Upon removal of the semi-finished product 10 from mandrel 4 (figure 3(d)), thread 50 runs through the thickness of the reinforcing fibers 6, forming the semi-finished product. Opposite ends of thread 50 are then brought together to close the polar gap 30 in the semi-finished product 10, as shown in figure 3(e). According to the invention, the first part in this embodiment comprises the part of the semi-finished product 10 covered by thread 50.

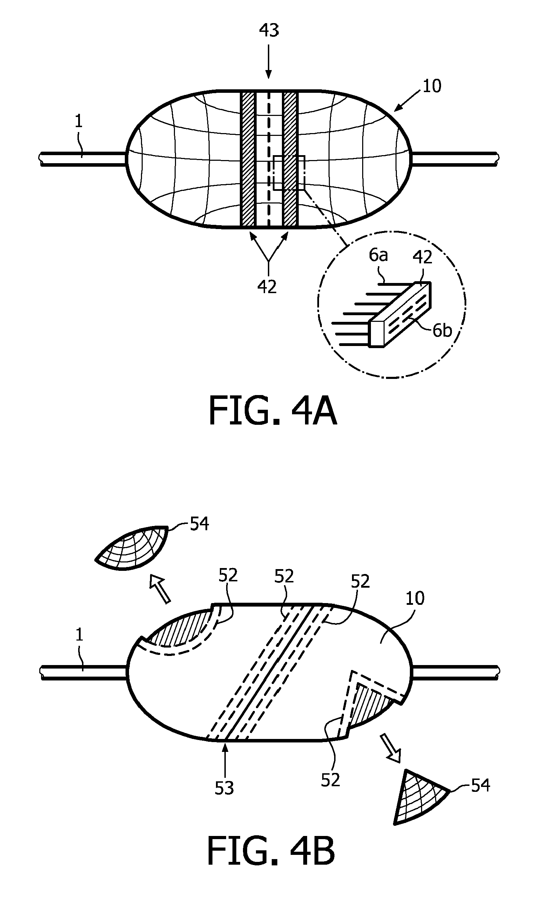

A number of fixation means are elucidated in figures 4A to 4F. In figure 4A, the semi-finished product 10 is provided with two local bands 42 of epoxy adhesive. The adhesive may cover part of the thickness of product 10, or may extend over the entire thickness, as shown in the insert of figure 4A. In bands 42 of the first part, the reinforcing fibers 6b are embedded in adhesive, while in the second part the reinforcing fibers 6a are substantially dry. In the embodiment shown, the semi-finished product 10 is divided into two semi-finished product halves by separating along line 43, which extends between fixation bands 42. In this way, product 10 can easily be demolded, and yet has sufficient stability, such as for handling, due to the presence of fixation band 42. Suitable adhesives include synthetic adhesives, such as elastomeric, thermoplastic (hot melt) and thermosetting adhesives. It is also possible to select the adhesive such that the reinforcing fibers 6 in the adhesive bands 42 may still show some slip, for instance to accommodate deformation.

In figure 4B, the first part of semi-finished product 10 is fixated by stitching or sewing lines 52. Stitching or sewing is performed after the reinforcing fibers have been positioned onto the mandrel 4. The parts 54 of product 10, enclosed by sewing lines 52 are cut along and close to the sewing lines 52 to obtain a semi-finished product 10 with cut-away areas. Such a product may show an improved drapeability, whereby the occurrence of wrinkles is reduced.

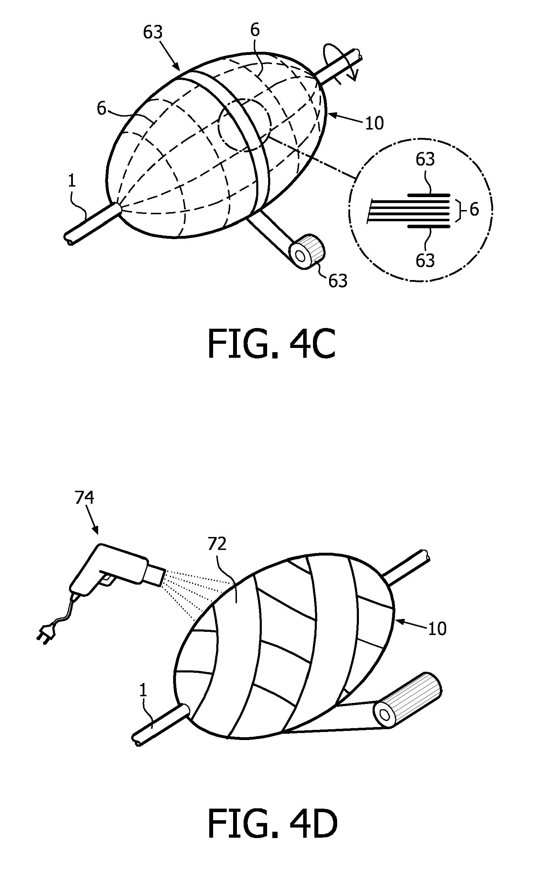

Figure 4C represents an embodiment wherein the mandrel is provided with bands of adhesive tape 63 in the first part only of the semi-finished product to be. Reinforcing fibers 6 are then positioned onto mandrel 4 by filament winding, whereby the reinforcing fibers 6 stick to adhesive tape 63. After winding the fibers 6 onto mandrel 4, the outer surface of semi-finished product 10 is again provided with adhesive tape 63 in its first part. This provides fixation of reinforcing elements 6 at their outer and inner surfaces only.

Figure 4D represents still another embodiment wherein reinforcing fibers are positioned onto a mandrel by filament winding, where after the semi-finished product 10 is provided with bands of shrink tape 72 in the first part only. By applying heat through heat gun 74, the tapes 72 shrink around product 10, thereby providing selective fixation of reinforcing fibers. Besides shrink tape 72, it is also possible to tightly wrap product 10 with stretch wrap tape in the first part. The elastic recovery of the stretch wrap tape provides selective fixation in the first part.

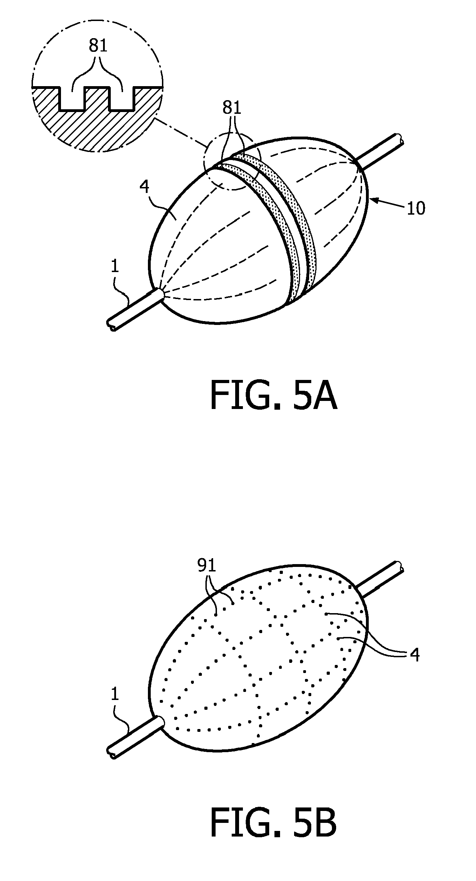

Figure 5A shows an embodiment of a mandrel 4 which is provided with a number of grooves or slots 81, which extend along lines or areas, representing the first part of the semi-finished product to be produced. Grooves 81 are created to accommodate room for stitching or sewing threads and needles, and/or for cutting means, in case a division needs to be produced. Figure 5B finally shows another embodiment of a mandrel 4 which is provided with a number of perforations 91 along lines or areas, representing the first part of the semi-finished product to be produced. Further, winding axis 1 is provided with a central bore to accommodate the supply of adhesive. Suitable fixation means, such as adhesive, may be dispensed under pressure through hollow axis 1 to perforations 91 to selectively fixate the reinforcing fibers in the first part of semi-finished product 10.

It should be noted that in all figures, the step of removing the semi-finished product from the mandrel has not been shown. Also the method for manufacturing a finished product, the method comprising the steps of optionally applying matrix material to a semi-finished product according to the invention, positioning the semi-finished product into a mould and compressing said semi-finished product at an elevated temperature and pressure to harden the matrix material, is not shown.

## Claims

1. Method for manufacturing a semi-finished product, wherein the method comprises the steps of positioning a plurality of elongated reinforcing elements, excluding drawn polyethylene reinforcing elements, onto a mandrel, allocating in the thus produced product a first part and, distinct therefrom, a second part, fixating the reinforcing elements in the first part, and removing the semi-finished product from the mandrel.

2. Method according to claim 1, **characterized in that** the reinforcing elements have a desired configuration in a finished product, and that the reinforcing elements are fixated such that the desired configuration is substantially obtained in the finished product when processing the semi-finished product into the finished product.

3. Method according to claim 2, **characterized in that** the positions of the first part are chosen such that the desired configuration is substantially obtained.

4. Method according to any one of the preceding claims, **characterized in that** the step of fixating the reinforcing elements comprises applying textile fixation means, such as stitching, braiding, knitting, and so on.

5. Method according to any one of the preceding claims, **characterized in that** the step of fixating reinforcing elements comprises applying adhering means.

6. Method according to claim 5, **characterized in that** the adhering means comprise a thermoset and/or thermoplastic adhesive and/or a shrink tape, and that the step of fixating the reinforcing elements comprises temporary heating the adhesive and/or the shrink tape.

7. Method according to claim 6, **characterized in that** the adhesive comprises adhesive tape, applied onto the mandrel before positioning the reinforcing elements, and/or onto the reinforcing elements after and/or during positioning of the reinforcing elements.

8. Method according to any of claims 5-7, **characterized in that** the adhering means comprise polymeric fibers, commingled with the reinforcing elements, and that the step of fixating the reinforcing elements comprises temporary heating the fibers.

9. Method according to any one of the preceding claims, **characterized in that** the method comprises the step of cutting reinforcing elements.

10. Method according to claim 9, **characterized in that** reinforcing elements are cut along a closed contour to divide the semi-finished product into at least one part that can be demolded.

11. Method according to claim 9, **characterized in that** reinforcing elements are cut along a contour to prevent wrinkling of the semi-finished product during subsequent processing into a finished product.

12. Semi-finished product, comprising a first part with fixated reinforcing elements, excluding drawn polyethylene reinforcing elements, and a distinct second part.

13. Semi-finished product, obtainable by the method according to any one of claims 1 to 11.

14. Semi-finished product according to claim 12 or 13, **characterized in that** the area covered by the first part is less than 50% of the area covered by the semi-finished product, more preferably less than 30%, even more preferably less than 15%, and most preferably less than 10%.

15. Method for manufacturing a finished product, the method comprising the steps of optionally applying matrix material to a semi-finished product according to any one of claims 1 to 14, positioning the semi-finished product into a mould and compressing said semi-finished product at an elevated temperature and pressure to harden the matrix material.

16. Product, preferably a helmet, obtainable by a method according to claim 15.
